# EUROPÄISCHE PATENTSCHRIFT

(11) **EP 1 495 907 B1**
(45) Veröffentlichungstag und Bekanntmachung des Hinweises auf die Patenterteilung: **25.07.2007**
(21) Anmeldenummer: 04014421.4
(22) Anmeldetag: 19.06.2004
(51) Int. Cl.: B60N 2/20

(54) **Beschlag für einen Fahrzeugsitz**
Fitting for a vehicle seat.
Ferrure pour un siège de véhicule.

(30) Priorität: 05.07.2003 DE 10330347
(43) Veröffentlichungstag der Anmeldung: 12.01.2005
(73) Patentinhaber: KEIPER GmbH & Co. KG, 67657 Kaiserslautern (DE)
(72) Erfinder: Unckrich, Hermann, 67821 Alsenz (DE)
(74) Vertreter: Patentanwälte Hosenthien-Held und Dr. Held

(56) Entgegenhaltungen:
- EP-A- 1 033 279
- DE-A- 10 048 127
- DE-C- 3 828 223

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

In der EP 1 033 279 A1 sind Beschläge für ein zentrales, d.h. um die Lehnenneigungseinstellachse erfolgendes Freischwenken beschrieben. Bei diesen Beschlägen ist das Schaltblech auf der Sperrklinke gelagert und stützt sich beispielsweise im Crashfall an einer Sperrkontur ab. Mittels eines am Schaltblech angebrachten Bowdenzugs wird dieses an der Sperrkontur vorbeigezogen und die Sperrklinke geöffnet.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Aus gestaltungen sind Gegenstand der Unteransprüche.

Für eine kompakte Bauweise ist das Schaltblech mittels einer Lagerstelle auf einem Sperrhebel gelagert, welcher auf einem Schaltbolzen gelagert ist, der wiederum im Beschlag gelagert ist. Indem der Schaltbolzen durch Drehung um seine Achse das Schaltblech bewegt und zwischen dem verriegelten Zustand und dem entriegelten Zustand umschaltet, können die im Beschlag gelegenen Bauteile besser vor Einflüssen von außen, beispielsweise Schweißspritzern bei der Montage oder Schmutz, geschützt werden, da die Durchtrittsöffnung für den Schaltbolzen so ausgebildet werden kann, dass zusammen mit dem Schaltbolzen eine gute Abdichtwirkung erzielt wird, und keine länglichen Durchtrittsöffnungen, wie beispielsweise für den Bowdenzug, vorgesehen werden müssen. Das Freischwenken soll auch den Übergang in eine Tischstellung der Lehne mit nahezu horizontal ausgerichteter Lehnenrückseite begrifflich umfassen.

Vorzugsweise beaufschlagt der Sperrhebel im verriegelten Zustand die Sperrklinke, d.h. er ist in der gleichen Ebene wie die Sperrklinke angeordnet. Die Bewegung des Schaltblechs ist dadurch in einer parallelen Ebene frei definierbar, wobei beim Überführen des Beschlags vom entriegelten Zustand in den verriegelten Zustand das Schaltblech vorzugsweise in Anlage an eine beschlagfeste Anlaufkontur gelangt, wonach die Gruppe aus Schaltbolzen, Sperrhebel und Schaltblech sich insgesamt um die Achse des Schaltbolzens dreht, bis vorzugsweise das Schaltblech in Anlage an eine beschlagfeste Sperrkontur gelangt und die Gruppe durch Relativbewegungen für eine Spielfreistellung sorgt. Vorzugsweise liegt im verriegelten Zu - stand das Schaltblech an dieser Sperrkontur an oder kommt bei einer externen Belastung in Anlage an diese, womit die Crashsicherheit gewährleistet ist. Die Einwirkung des Schaltbolzens auf das Schaltblech erfolgt vorzugsweise mittels wenigstens eines Schaltnockens in zwei unterschiedlichen Drehrichtungen, wobei ein Schaltnocken mit zwei schaltenden Enden oder zwei Schaltnocken vorgesehen sein können.

Die Erfindung kann für alle Fahrzeugsitze mit freischwenkbarer Lehne eingesetzt werden, insbesondere für Kraftfahrzeugsitze in zweitürigen Kraftfahrzeugen mit einer Rücksitzanlage.

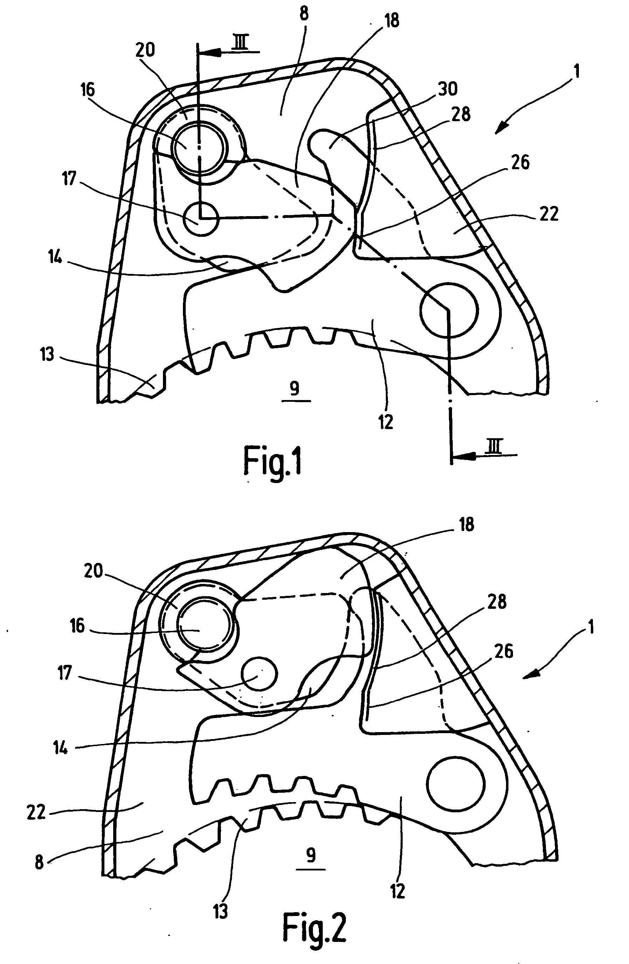

Im folgenden ist die Erfindung anhand eines in der Zeichnung dargestellter Ausführungsbeispiels näher erläutert. Es zeigen
- Fig. 1: einen nur teilweise dargestellten Schnitt durch das Ausführungsbeispiel in einem verriegelten Zustand,
- Fig. 2: ein Fig. 1 entsprechender Schnitt in einem entriegelten Zustand,

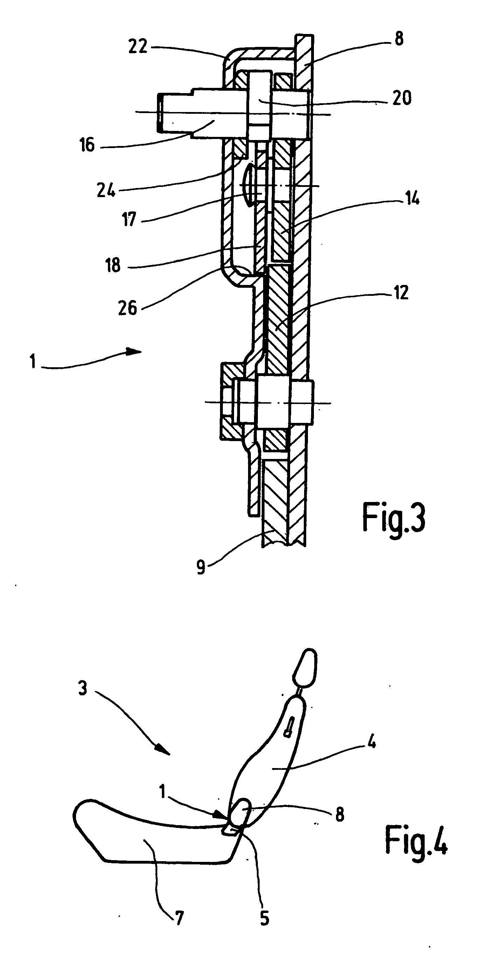

- Fig. 3: einen Schnitt entlang der Linie III-III in Fig. 1, und
- Fig. 4: eine schematische Seitenansicht eines Fahrzeugsitzes.

Ein Beschlag 1 für einen Fahrzeugsitz 3 eines zweitürigen Kraftfahrzeuges dient der Neigungseinstellung und dem Freischwenken der Lehne 4 des Fahrzeugsitzes 3. Die Anordnung des Fahrzeugsitzes 3 innerhalb des Kraftfahrzeuges und dessen gewöhnliche Fahrtrichtung bestimmen die nachfolgend verwendeten Richtungsangaben. Auf jeder Seite des Fahrzeugsitzes 3 ist ein Beschlag 1 vorgesehen, der mit einem Beschlagunterteil 5 am Sitzteil 7 des Fahrzeugsitzes 3 und mit einem Beschlagoberteil 8 an der Lehne 4 angebracht ist. Ein Beschlagzwischenteil 9 wirkt mit dem Beschlagunterteil 5 zur Neigungseinstellung der Lehne 4 zusammen, und zwar in einer an sich bekannten Weise als Getriebebeschlag oder als Rastbeschlag. Während der Neigungseinstellung ist das Beschlagoberteil 8 auf die nachfolgend beschriebene Weise mit dem Beschlagzwischenteil 9 verriegelt.

Das Beschlagoberteil 8 ist relativ zum Beschlagzwischenteil 9 schwenkbar gelagert. Im verriegelten Zustand greift eine am Beschlagoberteil 8 schwenkbar gelagerte Sperrklinke 12 mit einem oder mehreren Zähnen in Rasten 13 des Beschlagzwischenteils 9. Die Sperrklinke 12 wird gesichert durch einen Sperrhebel 14, der mittels eines Schaltbolzens 16 ebenfalls am Beschlagoberteil 8 schwenkbar gelagert ist und mittels einer exzentrisch zum Schaltbolzen 16 gekrümmten Spannkontur an der von den Zähnen abgewandten Seite der Sperrklinke 12 mit Selbsthemmung anliegt. Auf dem Sperrhebel 14 ist an einer Lagerstelle 17 ein Schaltblech 18 schwenkbar gelagert, welches in einer Ebene versetzt zur Sperrklinke 12 und zum Sperrhebel 14 angeordnet ist. Am Schaltbolzen 16 ist ein über einen Teil des Umfangs verlaufender, radial vorspringender Schaltnocken 20 angeformt. Die letztgenannten Bauteile sind innerhalb eines Bauraumes angeordnet, der durch das Beschlagoberteil 8 und ein im wesentlichen parallel dazu angeordneten, mit dem Beschlagoberteil 8 verbundenen Halteblech 22 definiert wird. Dieses Halteblech 22 dient hauptsächlich dem axialen Zusammenhalt der relativ zueinander verdrehbaren Beschlagteile. Gegebenenfalls ist beispielsweise auf dem Schaltbolzen 16 zur axialen Spielfreistellung ein Distanzring 24 angeordnet. Bis auf die Durchtrittsöffnungen für den Schaltbolzen 16 und den Lagerbolzen der Sperrklinke 12 weist das Halteblech 22 keine weiteren Öffnungen auf.

Im verriegelten Zustand spannt eine nicht näher dargestellte Schließfeder den Schaltbolzen 16 so vor, daß dieser mit einem schließenden Ende des Schaltnockens 20 das Schaltblech 18 beaufschlagt, in der Zeichnung im Uhrzeigersinn. Das Schaltblech 18 beaufschlagt den Sperrhebel 14, welcher mit seiner Sperrkontur die Sperrklinke 12 beaufschlagt und in einer geschlossenen Stellung hält. Die Relativpositionen von Steuernocken 20, Schaltblech 18 und Sperrhebel 14 hängen von der Toleranzlage ab. Auf jeden Fall befindet sich das Schaltblech 18 in einer Sperrstellung an oder unterhalb einer Sperrkontur 26 des Halteblechs 22. Wenn durch eine externe Belastung, beispielsweise im Crashfall oder im Mißbrauchsfall, die Selbsthemmung zwischen Sperrhebel 14 und Sperrklinke 12 überwunden wird, so öffnet der Sperrhebel 14 maximal soweit, bis das Schaltblech 18 sich an der Sperrkontur 26 (und am Schaltnocken 20) abstützt.

Für ein gewelltes Öffnen der Beschläge 1, d.h. für eine Überführung vom verriegelten Zustand in den entriegelten Zustand, was im folgenden auch als Umschalten bezeichnet ist, wird über eine nicht näher dargestellte, gemeinsame Entriegelungsvorrichtung bei beiden Beschlägen 1 der Schaltbolzen 16 entgegen der Kraft der Schließfeder um seine Achse gedreht, in der Zeichnung gegen den Uhrzeigersinn. Nun drückt das öffnende Ende des Schaltnockens 20 gegen das Schaltblech 18, welches sich um seine Lagerstelle 17 auf dem Sperrhebel 14 dreht, in der Zeichnung gegen den Uhrzeigersinn. Sobald das Schaltblech 18 die Sperrkontur 26 passiert hat und in den Bereich einer Anlaufkontur 28 des Halteblechs 22 gelangt, dreht sich die Gruppe aus Schaltbolzen 16, Schaltblech 18 und Sperrhebel 14 insgesamt um die Achse des Schaltbolzens 16 weiter, bis der entriegelte Zustand erreicht ist. Die freigegebene Sperrklinke 12 wird vom schwenkenden Sperrhebel 14 mittels eines an der Sperrklinke 12 angeformten Mitnehmerfingers 30 aufgezogen. Die Endpositionen der Bauteile können zwischen den beiden Fahrzeugsitzseiten unterschiedlich sein, um Toleranzen auszugleichen. Nun kann das Beschlagoberteil 8 relativ zum Beschlagzwischenteil 9 geschwenkt werden, d.h. die Lehne 4 freigeschwenkt werden, um den Zugang zur Rücksitzanlage zu ermöglichen, wobei die eingestellte Lehnenneigung gespeichert bleibt.

Wenn die Lehne 4 wieder zurückgeschwenkt ist, kann der Beschlag 1 bei unbetätigter Entriegelungsvorrichtung wieder verriegeln, d.h. selbsttätig wieder in den verriegelten Zustand umschalten. Aufgrund der Vorspannung der Schließfeder dreht sich der Schaltbolzen 16, und zwar in der Zeichnung im Uhrzeigersinn. Das schließende Ende des Schaltnockens 20 drückt auf das Schaltblech 18, welches sich in gleicher Richtung um seine Lagerstelle 17 dreht. Sobald das Schaltblech 18 in Anlage an die Anlaufkontur 28 gelangt, dreht sich die Gruppe aus Schaltbolzen 16, Schaltblech 18 und Sperrhebel 14 insgesamt um die Achse des Schaltbolzens 16 weiter, bis das Schaltblech 18 die Sperrkontur 26 erreicht und sich automatisch in einer Sperrstellung befindet. Danach dreht sich die Gruppe weiter, bis das Beschlagzwischenteil 9, die Sperrklinke 12 und der Sperrhebel 14 spielfrei verriegelt sind.

### Bezugszeichenliste

- 1: Beschlag
- 3: Fahrzeugsitz
- 4: Lehne
- 5: Beschlagunterteil
- 7: Sitzteil
- 8: Beschlagoberteil
- 9: Beschlagzwischenteil
- 12: Sperrklinke
- 13: Raste
- 14: Sperrhebel
- 16: Schaltbolzen
- 17: Lagerstelle
- 18: Schaltblech
- 20: Schaltnocken
- 22: Halteblech
- 24: Distanzring
- 26: Sperrkontur
- 28: Anlaufkontur
- 30: Mitnehmerfinger

## Patentansprüche

1. Beschlag für einen Fahrzeugsitz, insbesondere für einen Kraftfahrzeugsitz, mit wenigstens zwei zum zentralen Freischwenken einer Lehne (4) relativ zueinander verschwenkbaren Beschlagteilen (8, 9), einer schwenkbar gelagerten Sperrklinke (12), um die beiden Beschlagteile (8, 9) miteinander zu verriegeln, was einen verriegelten Zustand definiert, und einem Schaltblech (18) zum Sichern der Sperrklinke (12) gegen externe Belastungen, wobei der Beschlag (1) vom verriegelten Zustand in einen entriegelten Zustand überführbar ist, **dadurch gekennzeichnet, dass** das Schaltblech (18) mittels einer Lagerstelle (17) auf einem Sperrhebel (14) gelagert ist, welcher auf einem im Beschlag (1) gelagerten Schaltbolzen (16) gelagert ist, wobei der Schaltbolzen (16) durch Drehung um seine Achse das Schaltblech (18) bewegt und zwischen dem verriegelten Zustand und dem entriegelten Zustand umschaltet.

2. Beschlag nach Anspruch 1, **dadurch gekennzeichnet, dass** beim Überführen des Beschlags (1) vom entriegelten Zustand in den verriegelten Zustand das Schaltblech (18) in Anlage an eine beschlagfeste Anlaufkontur (28) gelangt, wonach die Gruppe aus Schaltbolzen (16), Sperrhebel (14) und Schaltblech (18) sich insgesamt um die Achse des Schaltbolzens (16) dreht.

3. Beschlag nach einem der vorhergehenden Ansprüche, **dadurch gekennzeichnet, dass** der Sperrhebel (14) im verriegelten Zustand die Sperrklinke (12) beaufschlagt.

4. Beschlag nach einem der vorhergehenden Ansprüche, **dadurch gekennzeichnet, dass** der Schaltbolzen (16) mittels wenigstens eines Schaltnockens (20) in zwei unterschiedlichen Drehrichtungen auf das Schaltblech (18) einwirkt.

5. Beschlag nach einem der vorhergehenden Ansprüche, **dadurch gekennzeichnet, dass** im verriegelten Zustand das Schaltblech (18) an einer beschlagfesten Sperrkontur (26) anliegt oder bei einer externen Belastung in Anlage kommt.

6. Beschlag nach einem der vorhergehenden Ansprüche, **dadurch gekennzeichnet, dass** am Beschlag (1) ein Halteblech (22) vorgesehen ist, welches zusammen mit einem Beschlagteil (8) einen Bauraum zur Aufnahme des Schaltbolzens (16), des Schaltblechs (18) und der Sperrklinke (12) definiert und welcher als Öffnungen nur die Durchtrittsöffnungen für den Schaltbolzen (16) und den Lagerbolzen der Sperrklinke (12) aufweist.

7. Fahrzeugsitz, insbesondere Kraftfahrzeugsitz, mit einer relativ zu einem Sitzteil (7) freischwenkbaren Lehne (4), **gekennzeichnet durch** zwei Beschläge nach einem der vorhergehenden Ansprüche.

## Claims

1. A fitting (1) for a vehicle seat, especially for a motor vehicle seat, having at least two fitting parts (8, 9) pivotable relative to one another for free central pivoting of a backrest (4), a pivotally mounted pawl (12) for locking the two fitting parts (8, 9) together, which defines a locked state, and a selector plate (18) for securing the pawl (12) against external stresses, the fitting (1) being transferable from the locked state to an unlocked state, **characterised in that** the selector plate (18) is mounted by means of a bearing point (17) on a locking lever (14), which is mounted on a control pin (16) mounted in the fitting (1), the control pin (16), by rotation about its axis, moving the selector plate (18) and switching it between the locked state and the unlocked state.

2. A fitting according to claim 1, **characterised in that** when transferring the fitting (1) from the unlocked state to the locked state, the selector plate (18) comes into engagement with a sloping contour (28) built into the fitting, after which the group comprising control pin (16), locking lever (14) and selector plate (18) rotates collectively about the axis of the control pin (16).

3. A fitting according to either of the preceding claims, **characterised in that** the locking lever (14) acts in the locked state on the pawl (12).

4. A fitting according to any one of the preceding claims, **characterised in that** the control pin (16) acts by means of at least one switching cam (20) in two different direction of rotation on the selector plate (18).

5. A fitting according to any one of the preceding claims, **characterised in that** in the locked state the selector plate (18) bears against, or in the event of an external stress comes into engagement with, a locking contour (26) built into the fitting.

6. A fitting according to any one of the preceding claims, **characterised in that** on the fitting there is provided a retaining plate (22), which together with one fitting part (8) defines an installation space for receiving the control pin (16), the selector plate (18) and the pawl (12), and which has, as openings, only the through-openings for the control pin (16) and the bearing pin of the pawl (12).

7. A vehicle seat, especially a motor vehicle seat, having a backrest (4) freely pivotable relative to a seat part (7), **characterised by** two fittings according to any one of the preceding claims.

## Revendications

1. - Armature pour un siège de véhicule, en particulier pour un siège de véhicule automobile, comportant au moins deux parties d'armature (8, 9) capables de pivoter l'une par rapport à l'autre en vue d'un pivotement libre central d'un dossier (4), un cliquet d'arrêt (12) monté apte à pivoter pour verrouiller l'une avec l'autre les deux parties d'armature (8, 9), ce qui définit un état verrouillé, et une tôle de commutation (18) pour assurer le cliquet d'arrêt (12) contre des charges externes, à l'occasion de quoi l'armature (1) est apte à être transférée de l'état verrouillé dans un état déverrouillé, **caractérisée par le fait que** la tôle de commutation (18) est montée au moyen d'un point d'appui (17) sur un levier d'arrêt (14), lequel est monté sur un boulon de commutation (16) monté dans l'armature (1), à l'occasion de quoi le boulon de commutation (16) déplace par rotation autour de son axe la tôle de commutation (18) et la commute entre l'état verrouillé et l'état déverrouillé.

2. - Armature selon la revendication 1, **caractérisée par le fait que**, lors du transfert de l'armature (1) de l'état déverrouillé dans l'état verrouillé, la tôle de commutation (18) parvient en appui sur un contour d'approche (28) solidaire de l'armature, après quoi le groupe formé par le boulon de commutation (16), le levier d'arrêt (14) et la tôle de commutation (18) tourne en bloc autour de l'axe du boulon de commutation (16).

3. - Armature selon l'une des revendications précédentes, **caractérisée par le fait que** le levier d'arrêt (14) percute le cliquet d'arrêt (12) dans l'état verrouillé.

4. - Armature selon l'une des revendications précédentes, **caractérisée par le fait que** le boulon de commutation (16) agit au moyen d'au moins une saillie de commutation (20) dans deux sens de rotation différents sur la tôle de commutation (18).

5. - Armature selon l'une des revendications précédentes, **caractérisée par le fait que**, dans l'état verrouillé, la tôle de commutation (18) est en appui sur un contour d'arrêt (26) solidaire de l'armature ou vient en appui en cas d'une charge externe.

6. - Armature selon l'une des revendications précédentes, **caractérisée par le fait que** sur l'armature (1) est disposée une tôle de maintien (22), laquelle, conjointement avec une partie d'armature (8) définit un espace de construction pour la réception du boulon de commutation (16), de la tôle de commutation (18) et du cliquet d'arrêt (12) et qui présente comme ouvertures seulement les ouvertures de passage pour le boulon de commutation (16) et le boulon d'appui du cliquet d'arrêt (12).

7. - Siège de véhicule, en particulier siège de véhicule automobile, comportant un dossier (4) apte à pivoter librement par rapport à une partie de siège (7), **caractérisé par** deux armatures telles que définies à l'une des revendications précédentes.
